# EUROPEAN PATENT SPECIFICATION

(11) **EP 4 714 641 B1**
(45) Date of publication and mention of the grant of the patent: **23.09.2026**
(21) Application number: 25203522.5
(22) Date of filing: 20.09.2025
(51) Int. Cl.: B29C 70/38, B29C 51/08, B29C 51/18, B29C 51/26, B29C 70/54

(54) **METHOD AND DEVICE FOR THE TRANSFER AND STAMPING OF A THERMOPLASTIC COMPOSITE BLANK**
VERFAHREN UND VORRICHTUNG ZUM TRANSFER UND STANZEN EINES THERMOPLASTISCHEN VERBUNDROHLINGS
PROCÉDÉ ET DISPOSITIF POUR LE TRANSFERT ET L'ESTAMPAGE D'UNE ÉBAUCHE EN MATÉRIAU COMPOSITE THERMOPLASTIQUE

(30) Priority: 24.09.2024 FR 2410146
(43) Date of publication of application: 25.03.2026
(73) Proprietor: Daher Aerospace, 94310 Orly (FR)
(72) Inventor: ZAWADKA, Laurent, 44680 SAINTE PAZANNE (FR)
(74) Representative: Hamann, Jean-Christophe

(56) References cited:
- WO-A1-2021/118069
- DE-A1- 102015 102 691
- US-B2- 9 393 746

## Description

### TECHNICAL FIELD

The invention belongs to the field of composite materials with a thermoplastic polymer matrix, and improvement to shaping methods using forming by stamping.

### BACKGROUND

A method for stamping a thermoplastic composite blank reinforced by continuous fibers is described in document EP 1,543,942.

According to the teachings of this document, a blank of an adapted shape is cut from a consolidated or partially consolidated composite plate, then the blank is brought to a temperature of the order of a melting temperature of the polymer making the matrix of the composite, the blank, thus deconsolidated, is stamped between a punch and a stamping die before being cooled and reconsolidated into shape between the punch and the stamping die.

Continuous fibrous reinforcements, such as carbon fibers, do not exhibit plasticity, including at the melting temperature of the thermoplastic polymer, thus, shaping of the blank during stamping is achieved by interlaminar slipping of composite plies, which requires a reduced viscosity of the thermoplastic polymer matrix.

One of the difficulties of such a method is the ability to transfer the blank to a heating area, then, once the temperature of the blank has been raised to a melting point of the polymer matrix and while the blank has very little cohesion, to transfer it to a stamping station while ensuring precise positioning of the blank with respect to the stamping tooling.

The heating temperature of the blank before its stamping, being of the order of the melting temperature of the thermoplastic polymer making the matrix of the composite, after this heating, the blank has very little cohesion and is likely to sag under the effect of its own weight.

According to some prior art, the blank may rest on a heat-resistant polyimide film during these transfers.

To this end, a conveyor adapted to move the blank from the heating station to the stamping station may comprise a pair of parallel jaws configured to clamping the edges of a polyimide film format and tensioning this polyimide film between the jaws, the blank laying on the polyimide film. The polyimide film is thus used as a support for the blank and its transfer from one station to another.

In a first station, the blank, laying on the film, may be heated by radiant panels, in order to bring the polymer making the matrix of the blank to a temperature equal to or greater than its melting point.

The deconsolidated blank, still laying on the tensioned polyimide film, is brought above a tooling, comprising a punch an a stamping a die, then the blank, still on the polyimide film, is stamped by a punch pushing the blank and the film against the walls of a cavity of the stamping die, while the tension in the polyimide film is loosen.

The blank and the polyimide film are then contained in an airgap delimited by the walls of the cavity and the walls of the punch, defining a shape of a part to be obtained, A cooling cycle makes it possible to reconsolidate the part in shape while the thickness of the finished part is calibrated through the control of the airgap thickness.

This method of the prior art has several shortcomings, in particular the polyimide film which is stamped at the same time as the blank, wrinkles during this operation. The creases resulting from this wrinkling are imprinted in the polymer making the matrix of the part and may produce undesirable defects more particularly for demanding applications such as aeronautical applications.

In addition, the high-temperature resistant polyimide film is for single use only and is therefore a consumable of a relatively high cost, which directly affects the cost of a part obtained by such a method.

Document EP 3,065,931 describes an improvement to the method exposed above, in which the blank is transported from a heating station to a stamping station on a holding frame, the holding frame comprises means for precisely positioning the blank on the holding frame and means for precisely positioning the holding frame with respect to the stamping tooling.

This embodiment thus avoids the use of a polyimide film, however it requires specific tooling that is to be adapted to the conveyor.

Although this embodiment is satisfactory, it is nevertheless limited to blanks a mass of which is relatively low. Indeed, when a thickness and a mass of the blank increase, the heating time under the radiant panels also increases and the holding means of the transfer frame are no longer sufficient to maintain the blank.

Document EP 4,349,560 describes a transfer frame suitable for a thick and heavy thermoplastic composite blank. This device also requires to be adapted to the conveyor and requires more preparation of the blank.

Document DE102015102691 discloses a transfer frame for conveying a blank to be thermally formed and comprising heat resistant support elements spring mounted to the frame and supporting the blank.

Document US9393746B2 discloses a device for the preparation of a dry textile preform, the device comprising a tensioning frame, the dry textile preform being suspended inside the frame with spring suspensions.

### SUMMARY

In a device adapted to a transfer apparatus for conveying a thermoplastic composite blank to a heating station and a stamping station, the thermoplastic composite blank may comprise reinforcing fibers in a thermoplastic polymer matrix the device may comprise a pair of jaws and a tensioning mechanism configured to maintain the jaws spaced apart form each other by a conveying width; the thermoplastic composite blank may comprise a shaping area configured to be shaped by stamping and supporting unidirectional fibers may extend beyond edges of the shaping area be attached to the shaping area, the unidirectional fibers may be pre-impregnated with a thermoplastic polymer; wherein ends of the supporting unidirectional fibers may be clamped in the pair of jaws and may be tensioned to the conveying width, so that the shaping area may be suspended between the jaws by the unidirectional fibers.

Thus, the thermoplastic composite blank may be supported suspended between the jaws during a heating phase prior the stamping operation and during the stamping operation, by rigid members such as unidirectional fibers, partly integrated into the plies in the lamination in some embodiment that may not sag and may maintain the thermoplastic composite blank even after being heated and deconsolidated since the support is provided by the reinforcing fibers themselves, thus enabling to carry a thick and heavy blank even during a long heating time.

The supporting unidirectional fibers may comprise holding tapes arranged in a supporting grid, the shaping area may rest on the supporting grid, secured to the supporting grid with pieces of a high temperature resistant adhesive.

The shaping area may comprise a lamination of fibrous plies and at least one ply of the lamination may comprise continuous fibers, the continuous fibers, pre-impregnated with the thermoplastic polymer of the matrix, may extend beyond edges of the shaping area as supporting unidirectional fibers.

The shaping area may comprise a lamination of fibrous plies and at least one ply of the lamination may comprise continuous fibers, parts of the continuous fibers, pre-impregnated with the thermoplastic polymer of the matrix, may extend beyond edges of the shaping area to form holding tapes as supporting unidirectional fibers.

The shaping area may comprise a lamination of fibrous plies comprising continuous fibers and unidirectional fibers of multiples fibrous plies distributed along a height of the lamination, pre-impregnated with the thermoplastic polymer of the matrix, may extend beyond the edges of the shaping area as supporting unidirectional fibers. Furthermore, a length of a supporting unidirectional fiber from an edge of the shaping area to a clamping slot of the jaw may change according to the height of the fibrous ply in the lamination

A transfer apparatus for conveying a thermoplastic composite blank to a heating station and a stamping station may comprise a pair of conveying rails, a device adapted to the transfer apparatus may have a pair of jaws attached to the pair of conveying rails and the stamping station may comprise a stamping die with a cavity and a punch configured to move in a stroke relative to the stamping die from an open position, enabling the device holding the thermoplastic composite blank to be moved by the transfer apparatus between the stamping die and the punch, and a closed position where the punch may enter the cavity, a surface of the punch may be distant from a surface of the cavity by a calibrated airgap. **In** the

**In** the transfer apparatus, the device may comprise a cable attached to the conveying rails and extending between the pairs of conveying rails; the punch may comprise a bumper attached to a side of the punch and configured to interact with the cable during the stroke of the punch, a tip of the bumper may push on the cable and may cause the jaws to move closer to each other.

**In** the transfer apparatus the shaping area may comprise a lamination of fibrous plies comprising continuous fibers and unidirectional fibers of multiples fibrous plies distributed along a height of the lamination, pre-impregnated with the thermoplastic polymer of the matrix, may extend beyond the edges of the shaping area as supporting unidirectional fibers; the pair of jaws may comprise piloted pivoting jaws attached to the conveying rails by a pivoting link with a pivoting axis parallel to a length of the conveying rails; a pivoting angle of the piloted pivoting jaws may be controlled by a rotating mechanism, the piloted pivoting jaws may comprise multiple clamping slots distributed at different heights relative to the pivoting axis, and may be configured to clamp the ends of the supporting unidirectional fibers according to their height in the lamination.

**In** a method for stamping a composite laminated blank comprising fibrous plies comprising continuous fibers in a thermoplastic polymer matrix and implementing a transfer apparatus as disclosed herein for conveying the composite laminated blank from a mounting station to a heating station and a stamping station; the thermoplastic composite blank may comprise a shaping area comprising a lamination of fibrous plies comprising continuous fibers in a thermoplastic polymer matrix and unidirectional supporting fibers pre-impregnated with a thermoplastic polymer; the method may comprise mounting the thermoplastic composite blank at the mounting station on a device comprising a pair of jaws attached to conveying rails of the transfer apparatus, by clamping ends of the supporting unidirectional fibers in clamping slots of the pair of jaws; the method may further comprise tensioning the unidirectional supporting fibers for suspending the thermoplastic composite blank between the conveying rails; the method may further comprise moving the thermoplastic composite blank mounted on the device to the heating station and heating the thermoplastic composite blank to a temperature adapted for stamping close to a melting point of the thermoplastic polymer matrix; the method may further comprise moving the heated thermoplastic composite blank on the device to the stamping station between a punch and a stamping die comprising a cavity; the method may further comprise relaxing a tension in the unidirectional supporting fibers and stamping the shaping area by a stroke of the punch towards the cavity the unidirectional supporting fibers being clamped in the slots of the jaws; the method may further comprise maintaining the shaping area in a calibrated airgap between the punch and the cavity for consolidation; the method may further comprise demolding a finished part.

The method may further comprise, after demolding, trimming extra lengths of the supporting unidirectional fibers not co-consolidated with the finished part.

In some embodiments of the method, the thermoplastic composite blank shaping area may comprise a lamination of fibrous plies comprising continuous fibers and unidirectional fibers of multiples fibrous plies distributed along a height of the lamination may extend beyond the edges of the shaping area as supporting unidirectional fibers, the supporting unidirectional fibers may be pre-impregnated with a thermoplastic polymer; the pair of jaws comprise piloted pivoting jaws attached to the conveying rails by a pivoting link with a pivoting axis parallel to a length of the conveying rails; a pivoting angle of the piloted pivoted jaws may be controlled by a rotating mechanism; the piloted pivoting jaws may comprise multiple clamping slots distributed at different heights relative to the pivoting axis, and configured to clamp the ends of the supporting unidirectional fibers according to their height in the lamination; the method may further comprise, during the mounting of the thermoplastic composite blank on the device, clamping the ends of the supporting unidirectional fibers in the in the multiple clamping slots of the piloted pivoting jaws according to their height in the lamination; the method may further comprise, during the stamping, after relaxing the tension, applying a differential tension to the fibrous plies by pivoting the piloted pivoting jaws

### BRIEF DESCRIPTION OF THE DRAWINGS

**FIG. 1** shows diagrammatic views of laminated composite blanks adapted to implementations and techniques of a method and a device for the transfer and the stamping of a thermoplastic composite blank;
**FIG. 2** shows a diagrammatic exploded view in perspective of another blank adapted to implementations and techniques of a method and a device for the transfer and the stamping of a thermoplastic composite blank;
**FIG. 3** shows in a top diagrammatic view, a device for holding a blank adapted to implementations and techniques of a method and a device for the transfer and the stamping of a thermoplastic composite blank;
**FIG. 4** shows in a top diagrammatic view and illustrative example of a transfer apparatus adapted to implementations and techniques of a method and a device for the transfer and the stamping of a thermoplastic composite blank;
**FIG. 5** shows in sectional diagrammatic views phases of a stamping operation in a transfer apparatus adapted to implementations and techniques of a method and a device for the transfer and the stamping of a thermoplastic composite blank;
**FIG. 6** shows in sectional diagrammatic views, a variant of phases of a stamping operation in a transfer apparatus adapted to implementations and techniques of a method and a device for the transfer and the stamping of a thermoplastic composite blank;
**FIG. 7** shows in perspective view illustrative example of finished part obtained by implementing techniques of a method and a device for the transfer and the stamping of a thermoplastic composite blank;
**FIG. 8** shows in diagrammatic perspectives, top and sectional views an illustrative example of a finish part and a blank adapted to implementations of a method and a device for the transfer and the stamping of a thermoplastic composite blank;
**FIG. 9** shows in diagrammatic views, illustrative examples of jaws adapted to implementations and techniques of a method and a device for the transfer and the stamping of a thermoplastic composite blank.
**FIG. 10** shows a flowchart of a manufacturing method of a finished part adapted to implementations and techniques of a method and a device for the transfer and the stamping of a thermoplastic composite blank.

### DETAILED DESCRIPTION

The method and device for the transfer and stamping of a thermoplastic composite blank, may avoid polyimide films and transfer frames for supporting composite blanks shaped by stamping, including during heating and with thick and heavy blanks, while saving costs and non-recyclable scraps of polyimide film.

The method and device for the transfer and stamping of a thermoplastic composite blank, may use blanks comprising a shaping area which may or may not comprise continuous fibers, and supporting unidirectional fibers pre-impregnated with a thermoplastic polymer, the unidirectional fibers being rigid and keeping their rigidity at high temperature, thus enabling a thick and heavy blank to be heated a longer time before stamping without risk of sagging, thus favoring a smooth interlaminar slipping and avoiding defects.

The method and device for the transfer and stamping of a thermoplastic composite blank, may further enable to control a tension in the plies of a laminated composite blank during stamping thus limiting or avoiding creasing and other defects for finished parts of complex shape.

An extra length of supporting unidirectional fibers may be removed from the finished part by conventional trimming and routing techniques, the scraps resulting from such trimming and routing may be recycled.

The device disclosed herein may easily be adapted to an existing transfer apparatus such as one used to transfer thermoplastic composite blanks on tensioned polyimide films.

Consolidation is step in the manufacturing of a composite part comprising a thermoplastic polymer matrix, where the part is cooled down under pressure from a temperature close to a melting point of the thermoplastic polymer making the matrix to a demolding temperature which may be a glass transition temperature of the thermoplastic polymer making the matrix. During this process degassing occurs, cavities in the lamination may be eliminated and molecular chains of the thermoplastic polymer develop, extending across the plies of the lamination, providing the composite part cohesion and its full mechanical properties.

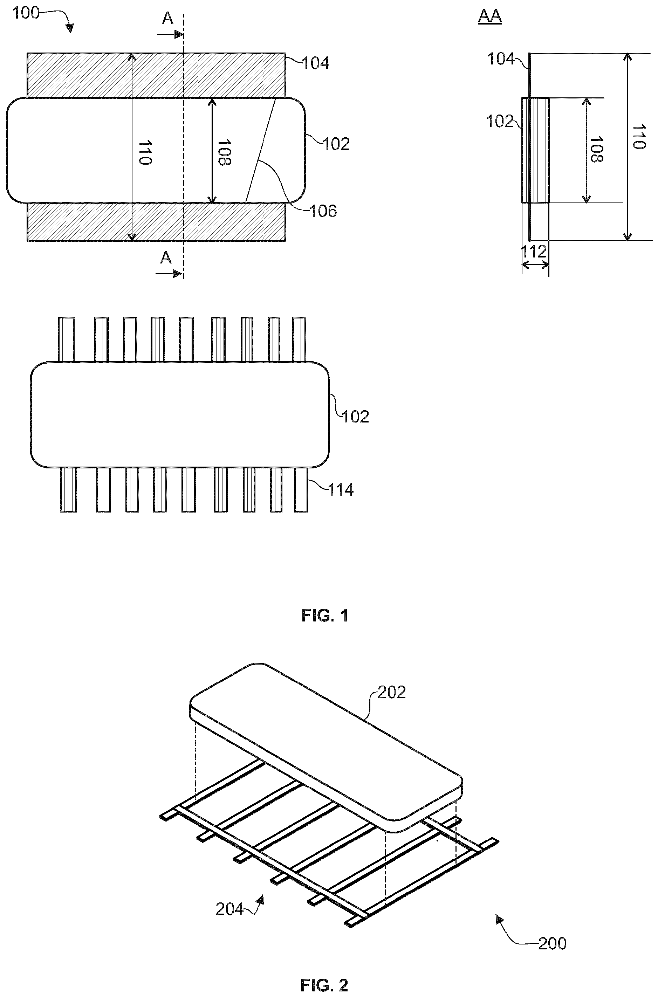

**FIG. 1** shows some embodiment of a composite blank **(100)** adapted for implementing techniques of the device and method for the transfer and stamping of a thermoplastic composite blank. In this representation the blank **(100)** may be substantially planar and may comprise a shaping area **(102)** intended to be shaped by stamping and comprising a lamination of fibrous plies which may be deposited by tape laying techniques such as automatic fibers placement or other techniques. The fibrous plies may comprise continuous fibers **(106)** made of carbon, glass, aramid or other reinforcing materials in a thermoplastic polymer matrix. Continuous fibers **(106)** are fibers extending continuously from one edge to another of the blank. The thermoplastic polymer matrix may be made of a polymer of the Polyaryl Ether Ketone, the Polyetherimide, the Polyphenylene Sulfide, the Polyethylene Terephthalate families or other thermoplastic polymer families or combination thereof. The plies in the lamination may comprise fibers oriented in various directions, such as 0° parallel to a length of the blank, 90° parallel to a width **(108)** of blank and other angles such as 45° depending on the application of the final part issued from the blank. The shaping area may have a width **(108)** and a thickness **(112)** comprising the full lamination of plies. One or more plies **(104)** of the lamination may comprise an extension (hatched in **FIG. 1****)** beyond edges of the shaping part **(102)** over a width **(110)** larger than the width **(108)** of the shaping part.

The plies **(104)** comprising an extension beyond the edges of the shaping area **(102)** may be used to hold the blank **(100)** during conveying, stamping and other operations for making the final part, thus being holding plies. The holding plies **(104)** may be located at various heights in the lamination stack.

The extensions beyond the edges of the shaping area **(102)** of the holding plies **(104)** may be slit in holding tapes **(114)** comprising unidirectional fibers pre-impregnated with the thermoplastic polymer matrix. The holding tapes **(114)** may be used to hold the blank **(100)** during conveying, stamping and other operations for making the final part. The holding tapes may also be deposited by extending deposited pre-impregnated fiber tows beyond the edges of the shaping area **(102)** upon tape laying the blank by automatic fibers placement. Holding tapes **(114)** as well as holding plies **(104)** comprising unidirectional continuous fibers may exhibit a high rigidity suitable for holding suspended a blank comprising a thick and heavy shaping area.

**FIG.** 2 shows a diagram **(200)** of another implementation of a blank adapted to techniques of the device and method for the transfer and stamping of a thermoplastic composite blank. A composite shaping blank **(202)** comprising a thermoplastic polymer matrix and reinforcing fibers, which may or may not comprise continuous fibers, and configured to be shaped by stamping, may be attached to a supporting grid **(204)** of holding tapes, for holding the blank suspended during conveying, stamping and other operations for making the final part. The supporting grid **(204)** of holding tapes may be obtained by tape laying, separately from the shaping blank, tapes comprising unidirectional continuous fibers pre-impregnated with the thermoplastic polymer making the matrix of the shaping blank or another polymer which may be miscible in the thermoplastic polymer making the matrix of the shaping blank. The shaping blank **(202)** may be secured to the supporting grid **(204)** of holding tapes with pieces of a high temperature resistant adhesive such as a polyimide-based adhesive. Therefore, during conveying, stamping and other operations for making the final part, the shaping **(202)** blank may rest secured on the supporting grid **(204)** of holding tapes.

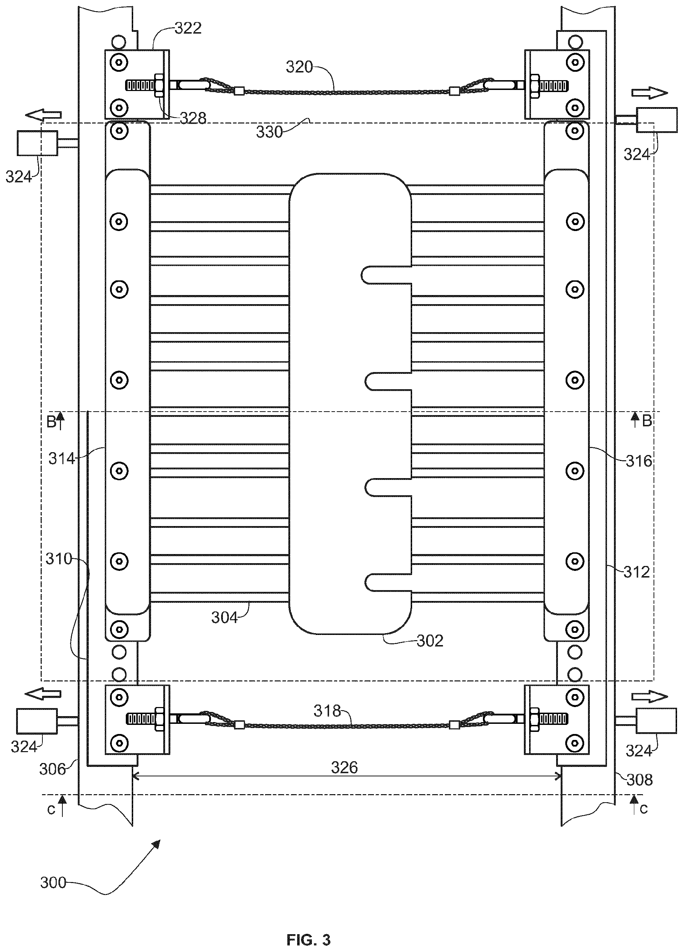

**FIG.** 3 shows a diagram **(300)** of a device for conveying a blank adapted for implementing techniques of the device and method for the transfer and stamping of a thermoplastic composite blank. The device is adapted for conveying a blank obtained by the techniques disclosed in **FIG. 1** and **FIG. 2****,** comprising a shaping area **(302)** or a shaping blank comprising reinforcing fibers in a thermoplastic polymer matrix, the blank further comprising holding tapes **(304)** or holding plies that may be extensions beyond the edges of the shaping area **(302)** of laminated plies or a supporting grid of holding tapes on which the shaping blank is attached. The holding tapes **(304)** may be the same or similar to the holing tapes **(114)** described in **FIG. 1****,** the supporting grid of holding tapes may be the same or similar to the supporting grid **(204)** of holding tapes disclosed in **FIG. 2** and the holdings plies may be the same or similar to the holding plies **(104)** disclosed in **FIG. 1****.** The shaping area **(302)** may be the same or similar to the shaping area **(102)** disclosed in **FIG. 1** or the same or similar to the shaping blank **(202)** disclosed in **FIG. 2****.**

The device may comprise a pair of mounting bars **(310, 312),** pairs of jaws **(314, 316)** attached to the mounting bars **(310, 312),** one or more cables **(318, 320)** extending in between the pair of mounting bars, outside a contour **(330)** of a stamping die, and connected to them by brackets **(322)** comprising a cable tensioner **(328),** and/or other components.

The device may be connected to a transfer apparatus comprising a pair of conveying rails **(306, 308)** to which the mounting bars **(310, 312)** may be attached and a tensioning mechanism which may comprise two or more spacer jacks **(324)** and/or other components, configured to adjust a conveying width **(326)** between the conveying rails **(306, 312),** and other components.

Each mounting bar **(310, 312)** may be affixed to a conveying rail **(306, 308)** and one or more pairs of jaws **(314, 316)** may be adjustably attached to each mounting bar **(310, 312).** Before mounting the blank on the device, the conveying width **(326)** between the conveying rails **(306, 308)** may be adjusted to receive the blank. The blank may be mounted on the device by the pairs of jaws **(314, 316)** clamping the ends of the holding tapes **(324)** or of the holding plies of the blank Once the ends of the holding tapes **(324)** or of the holding plies are clamped in the pairs of jaws **(314, 316)** the conveying rails **(306, 308)** may be further spaced apart from each other by activating the spacer jacks **(324)** thus increasing the conveying width **(326)** between the conveying rails **(306, 308)** and tensioning the holding tapes **(304)** or the holding plies, resulting in the blank being suspended between the conveying rails **(306, 308).**

The cables **(318, 320)** may be set between the conveying rails **(306, 308),** attached to the brackets **(322)** and tensioned using a cable tensioner **(328).**

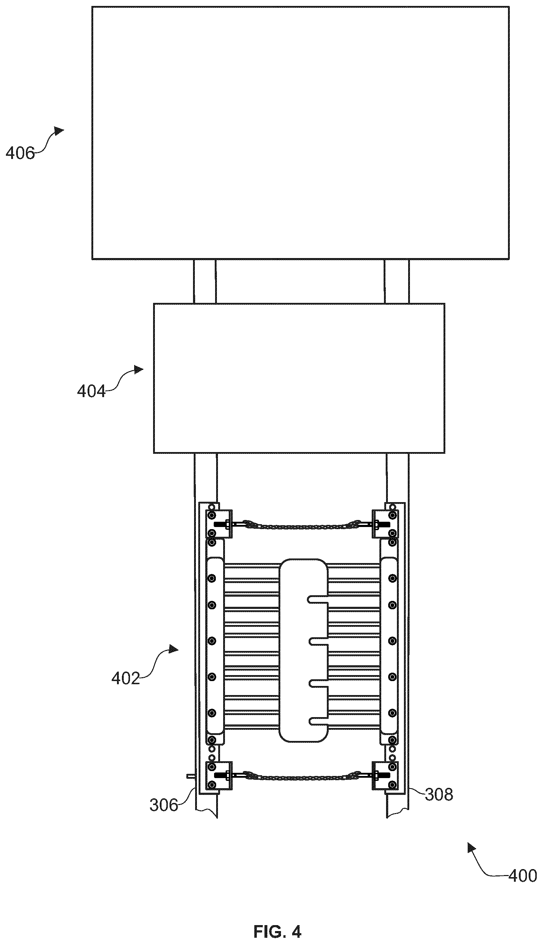

**FIG. 4** shows a diagram **(400)** of a stamping transfer apparatus adapted to techniques of the device and method for the transfer and stamping of a thermoplastic composite blank. The transfer apparatus may comprise a mounting station **(402)** where the blank may be set on the device according to the techniques described herein. The device may be conveyed by the conveying rails **(306, 308)** from the mounting station **(402)** to a heating station **(404)** while the blank remains suspended between the conveying rails **(306, 308)** held by the holding tapes **(304)** or the holding plies. The blank may stay in the heating station **(404),** set on the device, until a temperature of the shaping area or of the shaping blank reaches a temperature close to a melting point of the thermoplastic polymer making the matrix of the blank and adapted to the shaping of the shaping area **(302)** or the shaping blank by stamping. Once the blank reaches an appropriate temperature suitable for shaping by stamping, the device may be moved by the conveying rails **(306, 308)** to a stamping station **(406)** where the shaping area or the shaping blank, set in the device, may be shaped by stamping, The blank may remain suspended between the conveying rails during the transfer from the heating station **(404)** to the stamping station **(406)** because the holding tapes or the holding plies comprising unidirectional fibers do not sag because of the heat and remain tensioned.

The heating station **(404)** may comprise infrared radiant panels or other heating means suitable for heating the blank.

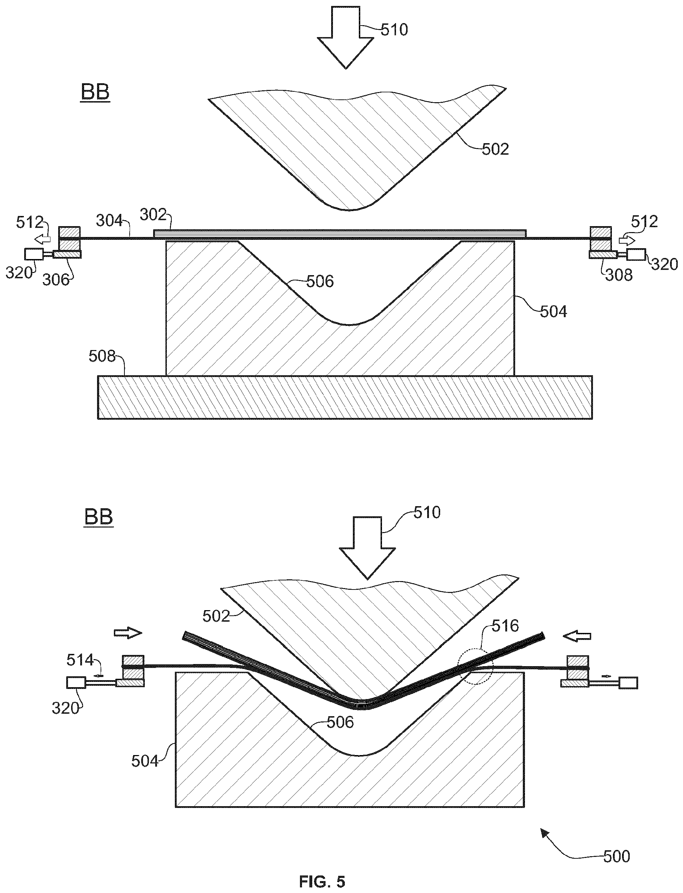

**FIG. 5** shows a diagrammatic sectional view BB **(500)** of a stamping station adapted to implementations of the device and method for the transfer and stamping of a thermoplastic composite blank. The stamping station may comprise a stamping tooling comprising a punch **(502)** and a stamping die **(504)** comprising a cavity **(506)** and/or other components. The stamping tool may be set in a press comprising a press platen **(508)** to which the stamping die **(504)** may be attached, a ram to which the punch **(502)** may be attached, configured to move the punch **(502)** according to a stamping stroke **(510),** and/or other components.

The stamping stroke **(510)** may be comprised between an open position and a closed position. In the open position the punch **(502)** may be remote from the cavity **(506),** enabling the stamping transfer apparatus to slide the device holding the blank, suspended between the conveying rails **(306, 308)** between the punch **(502)** and the stamping die **(504)** in a stamping position, where the shaping area **(302)** or the shaping blank may be in a defined position relative to the cavity **(506).** In the stamping position the spacer jacks **(320)** acting on the conveying rails **(306, 308)** may keep the holding tapes **(304)** or the holding plies tensioned, by exerting on the conveying rails a pulling force **(512).** The punch **(502)** may be aligned and paired with the cavity **(506)** and in the closed position the punch **(502)** enters the cavity **(506)** leaving a calibrated airgap between an outer surface of the punch and a surface of the cavity **(506).** The calibrated airgap may be the thickness of the final part obtained by the shaping by stamping of the blank.

A stamping operation may be performed by a stroke **(510)** of the punch **(502)** from the open position to the close position. During the stroke **(510)** the punch **(502)** may contact the shaping area **(302)** or the shaping blank and push it into the cavity **(506),** forcing the shaping area or the shaping blank to fit the shapes of the punch **(502)** and of the cavity **(506).** When the blank comprises continuous fibers, the shaping may occur by interlaminar slipping of the plies inside the lamination, the interlaminar slipping being made possible by a low viscosity of the thermoplastic polymer matrix previously heated to a temperature close to its melting point in the heating station. During the stamping operation the pulling action of the spacer jacks **(520)** may be relaxed, enabling the conveying width between the conveying rails to shorten and the jaws clamping the ends of the holding tapes or the holding plies to move towards edges of the cavity **(506),** being pulled by the holding tapes or the holding plies. The spacer jacks **(520)** may still exert a residual pulling force **(514)** on the conveying rails, thus setting some tension in the blank that may avoid some creasing or plies crimping.

The holding tapes **(304)** or holding plies may remain rigid during the stamping operation. The ends of the holding tapes or holding plies being clamped in the jaws, the interlaminar slipping process of plies of the lamination comprising holding tapes or holding plies may be affected during the stamping operation and may result in localized delaminations or plies separations **(516).**

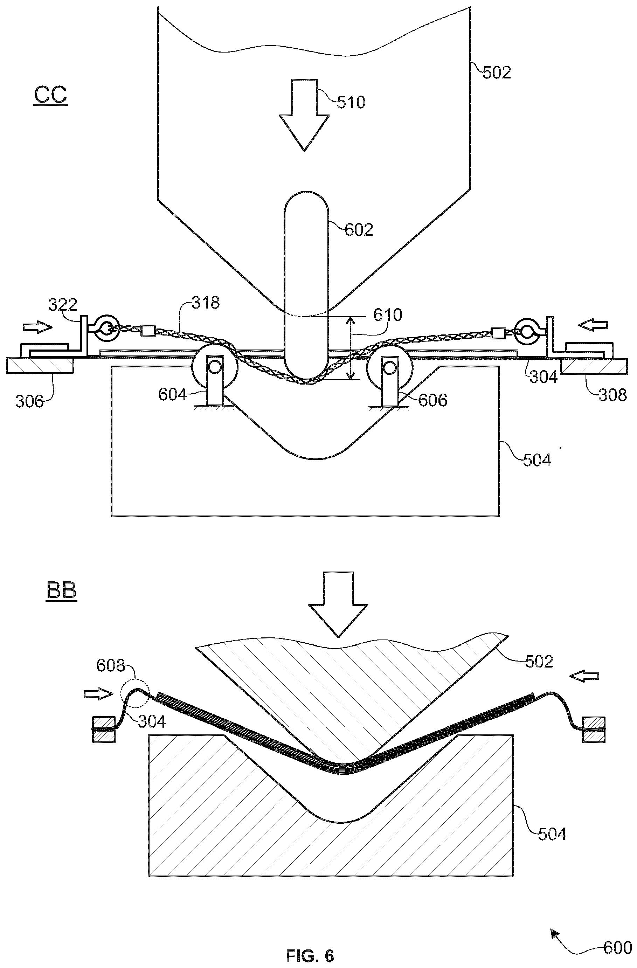

**FIG.** 6 shows diagrammatic sectional views **(600)** CC and BB of the of a stamping station adapted to implementations of the device and method for the transfer and stamping of a thermoplastic composite blank during a stamping operation. **FIG. 6** shows the components of **FIG. 5****,** a bumper **(602)** attached to the punch **(502),** a cable **(318)** extending and tensioned between the conveying rails and attached to them by brackets **(322),** pulleys **(604, 606)** configured to guide the cable and a buckling effect **(608)** in the holding tapes or holding plies resulting from an interaction of the bumper **(602)** with the cable during a stroke **(510)** of the punch. Cable **(318)** and brackets **(322)** may be the same or similar to those shown in **FIG. 3****.**

The punch **(502)** may comprise one or more bumpers **(602)** attached to a side of the punch **(502),** outside of a contour of the stamping die **(504),** protruding by a distance **(610)** from the tip of the punch **(502)** in the direction of the stroke **(510).** Protruding tips of the bumpers may be aligned with the cables **(318)** when the device is in the stamping station ready for the stamping operation.

The cable **(318)** may have been set and tensioned between the brackets **(322)** at the mounting station when the blank is set on the device. Two or more pulleys **(604, 606)** may be attached to a face of the stamping die or to other components of the transfer apparatus, positioned so that grooves of the pulleys **(604, 606)** may be aligned with the cable **(318)** when the device is in the stamping station and ready for the stamping operation.

During the stroke **(510)** of the punch from the open position to the closed position, the protruding tip of the bumper **(602)** may contact the cable **(318)** before a tip of the punch contacts the shaping area of the blank. The puling action of the spacer jacks being relaxed, as the movement of the punch **(502)** progresses according to the stroke **(510)** the action of the bumper **(602)** on the cable tends to move the conveying rails closer to each other. At one point of the stroke **(510)** the cable **(318)** may meet the grooves of the pulleys **(604, 606).** The pulleys may guide the cable. The positions of the pulleys **(604, 606)** relative to the cavity and their height relative to a cable height may allow to control a pulling pattern applied to the conveying rails during the stroke.

Seen in a BB diagrammatic sectional view, the cable pulling the conveying rails closer to each other, starting before the punch **(502)** touches the blank may initiate a buckling effect **(608)** in the holding tapes **(304)** or the holding plies, thus limiting or avoiding the risk of delaminations and plies separations.

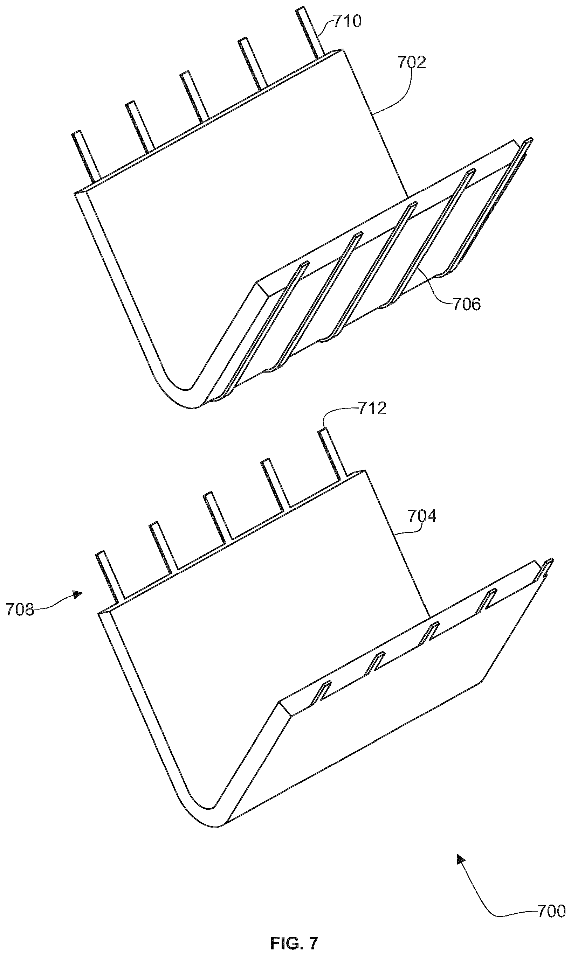

**FIG. 7** shows diagrammatic views **(700)** of finished parts which may be obtained by some implementations of the device and method for the transfer and stamping of a thermoplastic composite blank, after demolding and before trimming the extra lengths of the holding tapes or the holding plies. **FIG. 7** shows a first finished part **(702)** wherein a shaping blank similar to the shaping blank **(202)** of **FIG. 2** was stamped while resting secured on a supporting grid of holding tapes **(706)** similar to the supporting grid **(204)** of holding tapes of **FIG. 2****,** comprising unidirectional fibers pre-impregnated with a thermoplastic polymer, and a second finished part **(704)** wherein a shaping area similar to the shaping area **(102)** of **FIG. 1** was stamped while the shaping area was suspended by holding tapes **(708)** similar to the holding tapes **(114)** of **FIG. 1** the holding tapes being an extension beyond the edges of the shaping area of unidirectional fibers pre-impregnated with a thermoplastic polymer of a ply in the lamination.

In the first finished part **(702)** a part of the holding tapes **(706)** of the supporting grid which were stamped between the punch and the cavity of the stamping station with the shaping blank may be co-consolidated with the shaped shaping blank and be in material continuity with the lower face of the shaping blank on which the latter was resting on the supporting grid of holding tapes. An extra length **(710)** of the holding tapes may be removed when trimming or routing the contour of the finished part **(702).** The scraps resulting from such trimming or routing operation may be recycled according to a process disclosed in document EP 4 410 512 or another recycling process.

In the second finished part **(704)** a part of the holding tapes **(708)** or of the holding plies which were comprised in the lamination of the shaping area may be fully co-consolidated and shaped with the lamination and part of the structural plies in material continuity with the lamination. An extra length **(712)** of the holding tapes may be removed when trimming or routing the contour of the finished part **(704).** The scraps resulting from such trimming or routing operation may be recycled according to a process disclosed in document EP 4 410 512 or another recycling process.

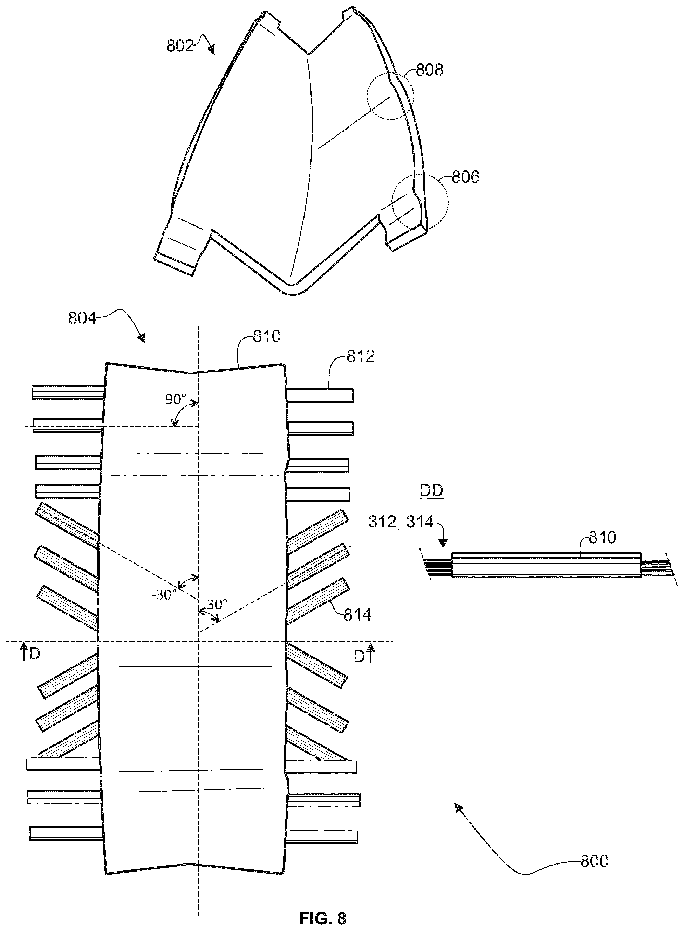

**FIG.** 8 shows diagrammatic views **(800)** of a finished part **(802)** that may be manufactured by some implementations of the device and the method for the transfer and stamping of a thermoplastic composite blank. **FIG. 8** shows an illustrative finished part **(802)** and a blank **(804)** in a top view and in a sectional view, configured to make the finished part **(802)** made of a composite material comprising continuous reinforcing fibers in a matrix made of a thermoplastic polymer, by stamping, implementing some techniques disclosed herein. The finished part may be of a non-developable 3D shape and may comprise thickness variations **(806),** joggling **(808)** or combination thereof. The blank **(804)** may comprise a shaping area **(810)** which may comprise a lamination of plies comprising continuous fibers in a thermoplastic polymer matrix. The shaping area **(810)** may comprise thickness variations to reflect thickness variations in the finish part **(802).** The blank **(804)** may further comprise holding tapes **(812, 814)** or holding plies, extending beyond edges of the shaping area **(810)** and comprising unidirectional fibers, pre-impregnated with a thermoplastic polymer which may be the same polymer as the thermoplastic polymer making the matrix of the shaping area **(810)** or another polymer that may be miscible in the polymer making the thermoplastic polymer matrix. The holding tapes **(312, 314)** or holding plies may be extensions beyond the edges of the shaping area **(810)** of plies that are part of the lamination of the shaping area **(810)** and located at different heights in the lamination. The shaping area **(810)** may be the same or similar to the shaping areas **(102, 302)** of **FIG. 1** and **FIG. 2****,** the holding tapes **(812, 814)** or holding plies may be the same or similar to the holding tapes of holing plies **(104, 114, 304)** of **FIG. 1** and **FIG. 3****.** Depending on the height of the ply in the lamination, the unidirectional fibers in the holding tapes **(812, 814)** may be oriented at 90° according to a longitudinal direction, or at other angles such as ±30° in the illustrative example of **FIG. 8. FIG. 8** is illustrative, the length of the holding tapes or holding plies extending beyond the edges of the shaping part may be much longer than depicted.

Because of the non-developable 3D shape of the finished part **(802)** further comprising joggling and thickness variations, shaping by stamping such a finished part from a substantially flat blank may involve some areas of the blank being in constriction and other areas being in expansion during the stamping operation. Because the continuous reinforcing fibers of the composite may not exhibit any plasticity, even when heated at a temperature suitable for stamping, such areas in constriction may exhibit creasing with wrinkles or crimps of the plies and areas in expansion may exhibit inter-ply squeezing of the matrix and other types of defects.

In some implementations of the device and the method for the transfer and stamping of a thermoplastic composite blank, the holding tapes or holding plies may be used to control a tension of the shaping part during the stamping operation which may limit or avoid defects like creasing or other type of defects.

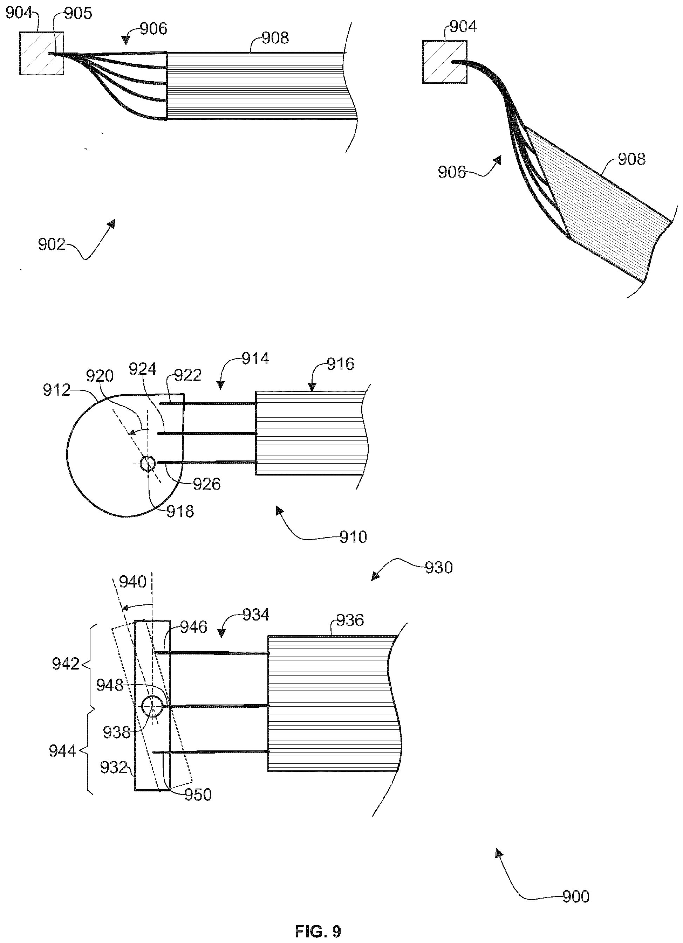

**FIG. 9** shows some embodiments diagrams **(900)** of improved jaws and jaw mechanisms that may cooperate with holding tapes or holding plies to control a tension in a blank during a stamping operation with some implementations of the device and the method for the transfer and stamping of a thermoplastic composite blank. **FIG. 9** shows a first illustrative embodiment **(902)** comprising fixed jaws **(904),** fixed relative to the conveying rails, being the same or similar to the jaws **(314, 316)** of **FIG. 3****,** each fixed jaws **(904)** may comprise a single clamping slot **(905)** configured to clamp a plurality **(906)** of holding tapes or holding plies that may be distributed at different heights of the shaping part **(908)** lamination, each holding tape or holding ply being an extension beyond the edges of the shaping part **(908)** of a ply comprised in the lamination of the shaping part **(908)** of a thermoplastic composite blank. Each holding tape or holding ply of the plurality **(906)** comprises unidirectional fibers pre-impregnated with a thermoplastic polymer. The plurality **(906)** of holding tapes or holding plies is clamped at one end in a fixed jaw **(904)** attached to the conveying rails of a transfer apparatus comprising an implementation of the device for implementing the method, the transfer and the stamping of a thermoplastic composite blank according to the present disclosure. The holding tapes or holding plies of the plurality **(906)** may have a different free length between an edge of the shaping area **(908)** and an end clamped into the fixed jaws **(904),** depending on a position of the ply in the lamination of the shaping area **(908)** from which they are an extension,. The holding tapes or holding plies of the plurality **(906)** may be the same or similar to the holding tapes or holding plies **(104, 114, 304, 812, 814)** of **FIG. 1****,** **FIG. 3** and **FIG. 8****.**

During the stamping operation the shaping part **(908)** may be pushed by the punch into the cavity, the tension maintaining the conveying rails being relaxed, thus enabling the conveying rails and the jaws **(904)** to move towards the cavity as explained in reference to **FIG. 5** and **FIG. 6****.** Because of the differences in free lengths of the holding tapes or the holding plies of the plurality **(906)** a tension may set in the plies which may favor interlaminar slipping while limiting or avoiding creasing. The adapted free length of the holding tapes or holding plies may be determined by stamping simulation as well as trial an error or combination thereof, with geometrical considerations of the transformation between a flat shape of the thermoplastic composite blank and the shape of the finished part.

A second illustrative embodiment may comprise a piloted pivoting jaw **(912).** The pivoting jaw **(912)** may be connected to a conveying rail of the transfer apparatus by a pivoting link of which a pivoting axis **(918)** may be substantially parallel to a conveying rail length. A pivoting angle of the pivoting jaw **(912)** may be controlled by an adapted rotating mechanism such as a step motor, or a slider crank mechanism and/or other components. A plurality **(914)** of holding tapes or holding plies comprising unidirectional fibers, corresponding to extensions of plies of the shaping part **(916)** lamination beyond the edges of the shaping part **(916)** and distributed at different heights in the lamination, may be clamped individually at an end of each holding tape or holding ply of the plurality **(914)** in multiple camping slots **(922, 924, 926)** located at heights relative to the conveying rails, on or above the pivoting axis **(918).** The holding tapes or holding plies of the plurality **(914)** may be the same or similar to the holding tapes or holding plies **(104, 114, 304, 812, 814)** of **FIG. 1****,** **FIG. 3** and **FIG. 8****.**

The individual holding tapes or holding plies of the plurality **(914)** may be clamped at different heights relative to the pivoting axis **(918)** of the piloted pivoting jaw **(912).** During the stamping operation the piloted pivoting jaw **(912)** may be pivoted by the pivoting mechanism by an angle **(920)** in opposite direction to the movement of the conveying rails of the transfer apparatus getting closer to each other, thus setting a differential tension in the plies, the ends of which are clamped into the pivoting jaw **(912)** through the holding tapes or the holding plies in the clamping slots **(922, 924, 926).** The more remote the clamping slot from the pivoting axis **(918)** the higher the tension. Such a differential tension may limit or avoid creasing or other defects during the stamping operation.

A third illustrative embodiment **(930)** may comprise a variant of a piloted pivoting jaw **(932).** The pivoting jaw **(932)** may be connected to a conveying rail of a transfer apparatus, by a pivoting link, of which the pivoting axis **(938)** may be substantially parallel to a conveying rail length. A pivoting angle of the pivoting jaw **(932)** may be controlled by an adapted rotating mechanism such as a step motor, or a slider crank mechanism and/or other components. A plurality **(934)** of holding tapes or holding plies comprising unidirectional fibers corresponding to extensions of plies of the shaping part **(936)** lamination beyond the edges of the shaping part **(936)** and distributed at different heights in the lamination, may be clamped individually at an end of each holding tape or holding ply of the plurality **(934)** in a clamping slot **(946, 948, 950).** The clamping slots located at heights relative to the conveying rails, on **(948)** the pivoting axis **(948),** above **(946)** the pivoting axis **(938)** or under **(950)** the pivoting axis (938). The holding tapes or holding plies of the plurality **(934)** may be the same or similar to the holding tapes or holding plies **(104, 114, 304, 812, 814)** of **FIG. 1****,** **FIG. 3** and **FIG. 8****.**

The individual holding tapes or holding plies of the plurality **(934)** may be clamped at different heights relative to the pivoting axis **(938)** of the piloted pivoting jaw **(932).** Depending on the height of the ply they are an extension in the lamination, some of the ends of the holding tapes or holding plies of the plurality **(934)** may be clamped on an extension side **(942)** of the pivoting jaw **(932),** comprising the clamping slots **(946)** located above the pivoting axis **(938),** some other holding tapes or holding plies of the plurality **(936)** may be clamped on a constriction side **(944),** diametrically opposed to the extension side relative to the pivoting axis **(938)** and comprising the clamping slots **(950)** located under the pivoting axis **(938).** During the stamping operation the piloted pivoting jaw **(932)** may be pivoted by the pivoting mechanism by an angle **(940)** in opposite direction of the movement of the conveying rails of the transfer apparatus getting closer to each other, thus setting a differential tension in the plies the ends of which are clamped into the pivoting jaw **(932)** through the holding tapes or the holding plies. The holding tapes or the holding plies of the plurality **(936)** which are clamped on the extension side **(944)** of the pivoting jaw **(932)** may experience an increased tension, the holding tapes or the holding plies of the plurality **(936)** which are clamped in the constriction side **(944)** may experience a reduced tension, the more remote the clamping from the pivoting axis **(938)** the higher the effect. Such a differential tension may limit or avoid creasing or other defects appearance during the stamping operation.

The first, the second and the third illustrative embodiments may be combined in any technically operative combination.

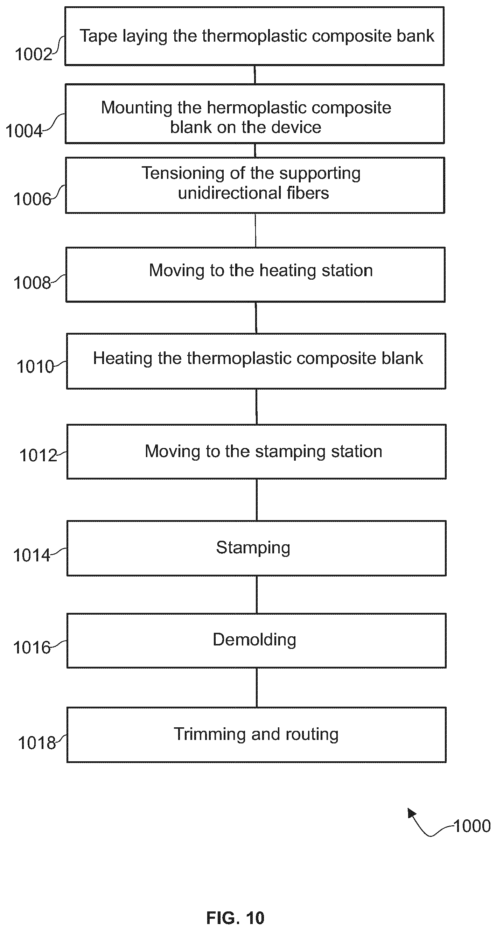

**FIG. 10** shows a flowchart **(1000)** of a method for manufacturing a composite finished part with a thermoplastic polymer matrix implementing techniques of the device and the method for the transfer and stamping of a thermoplastic composite blank.

At **1002** the thermoplastic composite blank may be made using tape laying techniques such as automatic fibers placement or other lamination techniques. The thermoplastic composite blank may include supporting unidirectional fibers extending beyond edges of a shaping area. Supporting unidirectional fibers are pre-impregnated with a thermoplastic polymer which may be the same as the thermoplastic polymer making the matrix. Supporting unidirectional fibers may b e the same or similar to holding tapes or holding plies **(104, 114, 204, 304, 812, 812) of** **FIG. 1, FIG. 2****,** **FIG. 3** and **FIG. 8****.** The thermoplastic composite blank may be produced with a high material deposition rate since the thermoplastic composite blank does not need to be consolidated.

At **1004** the thermoplastic composite blank may be mounted in the device on a transfer apparatus being the same or similar to the transfer apparatus of **FIG. 4****,** by clamping ends of the supporting fibers, the latter being holding tapes or holding plies, in the jaws of the device.

At **1006** the supporting unidirectional fibers may be tensioned using the tensioning mechanism of the transfer apparatus so that the thermoplastic composite blank in suspended by the supporting unidirectional fibers between the conveying rails of the transfer apparatus.

\At **1008** the thermoplastic composite blank, suspended between the conveying rails may be moved, on the device, to the heating station. The heating station may comprise infrared radiant panels and/or other heating means.

At **1010** the thermoplastic composite blank may be heated on the device to a temperature close to a melting point of the thermoplastic polymer making the matrix. The heating step may last long enough for such a temperature to be reached all over the surface and through the full thickness of the thermoplastic composite blank to avoid fibers anchor point inside the lamination which may generate defects during the stamping operation.

At **1012** the heated thermoplastic composite blank may be moved on the device to the stamping station. At the stamping station the punch may be in the open position allowing the thermoplastic composite blank to be slid, on the device between the punch and the stamping die, perfectly positioned over the cavity.

At **1014** a shaping area of the thermoplastic composite blank may be stamped by triggering the stroke of the punch, At the same time the stroke is triggered the tension in the supporting unidirectional fibers may be relaxed or partly relaxed. Depending on the shape of the finished part to be obtained differential tension may be applied across the supporting unidirectional fibers.

At **1016** the finished part my be demolded after cooling down to an appropriate demolding temperature.

At **1018** the finished part may be trimmed and/or routed to give it its final contour and to remove the extra length of the supporting unidirectional fibers extending beyond the contour of the finished part. The scraps generated during trimming and routing may be recycled.

It should be noted that the devices, apparatus and methods described herein describe possible implementations, and that the embodiments, the operations and the steps may be rearranged or otherwise modified and that other implementations are possible.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

Features implementing functions may be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

The description herein is provided to enable a person skilled in the art to make or use the disclosure. Various modifications to the disclosure will be readily apparent to those skilled in the art, and the generic principles defined herein may be applied to other variations without departing from the scope of the disclosure.

## Claims

1. A device (300) adapted to a transfer apparatus for conveying a thermoplastic composite blank (100, 200, 804) to a heating station (404) and a stamping station (406), the thermoplastic composite blank comprising reinforcing fibers in a thermoplastic polymer matrix, comprising:
a pair of jaws (314, 316, 904, 912, 932) and a tensioning mechanism configured to maintain the jaws spaced apart from each other by a conveying width (326); and
the thermoplastic composite blank comprising a shaping area (102, 202, 302, 702, 704, 810), configured to be shaped by stamping, and supporting unidirectional fibers (104, 114, 204, 304, 812, 814, 906, 914, 934) extending beyond edges of the shaping area and attached to the shaping area, the unidirectional fibers being pre-impregnated with a thermoplastic polymer;
wherein ends of the unidirectional fibers are clamped in the pair of jaws and tensioned to the conveying width (326), the shaping area being suspended between the jaws by the supporting unidirectional fibers.

2. The device of claim 1, wherein the supporting unidirectional fibers comprise holding tapes (204) arranged in a supporting grid and wherein the shaping area (202) rests on the supporting grid, secured to the supporting grid with pieces of a high temperature resistant adhesive.

3. The device of claim 1, wherein the shaping area comprises a lamination of fibrous plies, at least one ply of the lamination comprising continuous fibers, the continuous fibers, pre-impregnated with the thermoplastic polymer of the matrix, extending beyond edges of the shaping area as supporting unidirectional fibers.

4. The device of claim 1, wherein the shaping area comprises a lamination of fibrous plies, at least one ply of the lamination comprising continuous fibers, parts of the continuous fibers, pre-impregnated with the thermoplastic polymer of the matrix, extending beyond edges of the shaping area to form holding tapes (114, 304, 812, 814) as supporting unidirectional fibers.

5. The device of claim 1, wherein the shaping area comprises a lamination of fibrous plies comprising continuous fibers and wherein unidirectional fibers (104, 114, 812, 814, 906, 914, 934) of multiples fibrous plies distributed along a height of the lamination, pre-impregnated with the thermoplastic polymer of the matrix, extend beyond the edges of the shaping area as supporting unidirectional fibers.

6. The device of claim 5, wherein a length of a supporting unidirectional fiber from an edge of the shaping area to a clamping slot (922, 924, 926, 946, 948, 950) of the jaw being different according to the height of the fibrous ply in the lamination.

7. A transfer apparatus for conveying a thermoplastic composite blank (100, 200, 804) to a heating station (404) and a stamping station (406), comprising a pair of conveying rails (306, 308) and the device of claim 1 wherein the pair of jaws (314, 316, 904, 912, 932) is attached to the pair of conveying rails and wherein the stamping station comprises a stamping die (504) with a cavity (506) and a punch (502) configured to move in a stroke (510) relative to the stamping die from an open position enabling the device holding the thermoplastic composite blank to be moved by the transfer apparatus between the stamping die and the punch and a closed position wherein the punch enters the cavity, a surface of the punch being distant from a surface of the cavity by a calibrated airgap.

8. The transfer apparatus of claim 7, wherein the device comprises a cable (318) attached to the conveying rails (306, 308) and extending between the pairs of conveying rails, the punch comprising a bumper (602) attach to a side of the punch and configured to interact with the cable during the stroke (510) of the punch, a tip of the bumper pushing on the cable to cause the jaws to move closer to each other.

9. The transfer apparatus of claim 7, wherein the shaping area comprises a lamination of fibrous plies comprising continuous fibers and wherein unidirectional fibers (104, 114, 812, 814, 906, 914, 934) of multiples fibrous plies distributed along a height of the lamination extend beyond the edges of the shaping area as supporting unidirectional fibers, the supporting unidirectional fibers being pre-impregnated with a thermoplastic polymer and wherein the pair of jaws comprises piloted pivoting jaws (912, 932) attached to the conveying rails by a pivoting link with a pivoting axis (918, 938) parallel to a length of the conveying rails, a pivoting angle (920, 940) of the piloted pivoting jaws being controlled by a rotating mechanism, the piloted pivoting jaws comprising multiple clamping slots (922, 924, 926, 946, 948, 950) distributed at different heights relative to the pivoting axis (918, 938), and configured to clamp the ends of the supporting unidirectional fibers (906, 914, 934) according to their height in the lamination.

10. A method for stamping a thermoplastic composite blank comprising fibrous plies comprising continuous fibers in a thermoplastic polymer matrix, implementing a transfer apparatus for conveying the thermoplastic composite blank from a mounting station (402) to a heating station (404) and a stamping station (406), the thermoplastic composite blank comprising a shaping area comprising a lamination of fibrous plies, comprising continuous fibers in a thermoplastic polymer matrix and unidirectional supporting fibers pre-impregnated with the thermoplastic polymer, comprising:
Mounting (1004) the thermoplastic composite blank at the mounting station on a device comprising a pair of jaws attached to conveying rails of the transfer apparatus, by clamping ends of the supporting unidirectional fibers in clamping slots of the pair of jaws;
Tensioning (1006) the unidirectional supporting fibers for suspending the thermoplastic composite blank between the conveying rails;
moving (1008) the laminated composite blank mounted on the device to the heating station (404) and heating (1010) the thermoplastic composite blank to a temperature adapted for stamping, close to a melting point of the thermoplastic polymer matrix;
moving (1010) the heated thermoplastic composite blank mounted on the device to the stamping station (406) between a punch and a stamping die comprising a cavity;
relaxing a tension in the unidirectional supporting fibers and stamping (1014) the shaping area by a stroke of the punch towards the cavity, the unidirectional supporting fibers being clamped in the clamping slots of the jaws;
maintaining the shaping area in a calibrated airgap between the punch and the cavity for consolidation; and
demolding (1018) a finished part (702, 704, 802).

11. The method of claim 10, comprising, after demolding (1018), trimming (1018) extra lengths of the supporting unidirectional fibers not co-consolidated with the finished part.

12. The method of claim 10, wherein the thermoplastic composite blank shaping part comprises a lamination of fibrous plies comprising continuous fibers and wherein unidirectional fibers of multiples fibrous plies distributed along a height of the lamination extend beyond edges of the shaping area as supporting unidirectional fibers, the supporting unidirectional fibers being pre-impregnated with a thermoplastic polymer and wherein the pair of jaws comprises piloted pivoting jaws (912, 932) attached to the conveying rails (306, 308) by a pivoting link with a pivoting axis (918, 938) parallel to a length of the conveying rails, a pivoting angle (920, 940) of the piloted pivoted jaws being controlled by a rotating mechanism, the piloted pivoting jaws comprising multiple clamping slots (922, 924, 926, 946, 948, 950) distributed at different heights relative to the pivoting axis, and configured to clamp the ends of the supporting unidirectional fibers according to their height in the lamination, comprising:
during the mounting (1004) of the thermoplastic composite blank on the device, clamping the ends of the supporting unidirectional fibers in the multiple clamping slots (922, 924, 926, 946, 948, 950) of the piloted pivoting jaws according to their height in the lamination; and
during the stamping (1014), after relaxing the tension, applying a differential tension to the plies by pivoting the piloted pivoting jaws (912, 932).

## Patentansprüche

1. Vorrichtung (300), die an eine Transfervorrichtung angepasst ist, um einen thermoplastischen Verbundrohling (100, 200, 804) zu einer Heizstation (404) und einer Tiefziehenstation (406) zu befördern, wobei der thermoplastische Verbundrohling Verstärkungsfasern in einer thermoplastischen Polymermatrix umfasst, mit:
ein Paar Backen (314, 316, 904, 912, 932) und einen Spannmechanismus, der so ausgelegt ist, dass er die Backen in einem Abstand voneinander hält, der einer Förderbreite (326) entspricht; und
wobei der thermoplastische Verbundrohling einen Formungsbereich (102, 202, 302, 702, 704, 810) umfasst, der so ausgelegt ist, dass er durch Tiefziehen geformt wird, und unidirektionale Fasern (104, 114, 204, 304, 812, 814, 906, 914, 934), die über die Ränder des Formungsbereichs hinausragen und an diesem befestigt sind, wobei die unidirektionalen Fasern mit einem thermoplastischen Polymer vorimprägniert sind;
wobei die Enden der unidirektionalen Fasern in dem Backenpaar eingespannt und auf die Förderbreite (326) gespannt sind, wobei der Formungsbereich durch die tragenden unidirektionalen Fasern zwischen den Backen aufgehängt ist.

2. Vorrichtung nach Anspruch 1, wobei die tragenden unidirektionalen Fasern Haltebänder (204) umfassen, die in einem Tragraster angeordnet sind, und wobei der Formungsbereich (202) auf dem Tragraster aufliegt und mit Stücken eines hochtemperaturbeständigen Klebstoffs am Tragraster befestigt ist.

3. Vorrichtung nach Anspruch 1, wobei der Formungsbereich einen Laminat aus Faserschichten umfasst, wobei mindestens eine Schicht des Laminats Endlosfasern umfasst, wobei sich die mit dem thermoplastischen Polymer der Matrix vorimprägnierten Endlosfasern als stützende unidirektionale Fasern über die Ränder des Formungsbereichs hinaus erstrecken.

4. Vorrichtung nach Anspruch 1, wobei der Formungsbereich einen Laminatverbund aus Faserschichten umfasst, wobei mindestens eine Schicht des Laminatverbunds Endlosfasern umfasst, wobei Teile der Endlosfasern, die mit dem thermoplastischen Polymer der Matrix vorimprägniert sind, über die Ränder des Formungsbereichs hinausragen, um Haltebänder (114, 304, 812, 814) als stützende unidirektionale Fasern zu bilden.

5. Vorrichtung nach Anspruch 1, wobei der Formungsbereich ein Laminat aus Faserschichten umfasst, die Endlosfasern enthalten, und wobei unidirektionale Fasern (104, 114, 812, 814, 906, 914, 934) aus mehreren Faserschichten, die entlang der Höhe des Laminats verteilt sind und mit dem thermoplastischen Polymer der Matrix vorimprägniert sind, über die Ränder des Formungsbereichs hinausragen und als tragende unidirektionale Fasern dienen.

6. Vorrichtung nach Anspruch 5, wobei die Länge einer stützenden unidirektionalen Faser von einem Rand des Formgebungsbereichs bis zu einem Klemmschlitz (922, 924, 926, 946, 948, 950) der Backe je nach Höhe der Faserschicht im Laminat unterschiedlich ist.

7. Eine Transfervorrichtung zum Befördern eines thermoplastischen Verbundwerkstoff-Rohlings (100, 200, 804) zu einer Heizstation (404) und einer Tiefziehenstation (406), umfassend ein Paar Förderschienen (306, 308) und die Vorrichtung nach Anspruch 1, wobei das Paar Backen (314, 316, 904, 912, 932) an dem Paar von Förderschienen befestigt ist und wobei die Tiefziehenstation ein Unterstemple (504) mit einem Matriz (506) und einem Stempel (502), der so ausgelegt ist, dass er sich in einem Hub (510) relativ zur Unterstempel von einer offenen Position, in der die Vorrichtung, die den thermoplastischen Verbundwerkstoff-Rohling hält, von der Transfervorrichtung zwischen die Unterstempel und den Stempel bewegt werden kann, in eine geschlossene Position bewegt, in der der Stempel in den Matriz eindringt, wobei eine Oberfläche des Stempels von einer Oberfläche des Matriz durch einen kalibrierten Luftspalt beabstandet ist.

8. Die Transfervorrichtung nach Anspruch 7, wobei die Vorrichtung ein Kabel (318) umfasst, das an den Förderschienen (306, 308) befestigt ist und sich zwischen den Paaren von Förderschienen erstreckt, wobei der Stempel einen an einer Seite des Stempels angebrachten Puffer (602) umfasst, der so ausgebildet ist, dass er während des Hubs (510) des Stempels mit dem Kabel zusammenwirkt, wobei eine Spitze des Puffer auf das Kabel drückt, um zu bewirken, dass sich die Backen einander annähern.

9. Die Transfervorrichtung nach Anspruch 7, wobei der Formungsbereich eine Laminierung aus Faserschichten umfasst, die Endlosfasern enthalten, und wobei unidirektionale Fasern (104, 114, 812, 814, 906, 914, 934) aus mehreren Faserschichten, die entlang der Höhe des Laminats verteilt sind, über die Ränder des Formungsbereichs hinausragen und als stützende unidirektionale Fasern dienen, wobei die stützenden unidirektionalen Fasern mit einem thermoplastischen Polymer vorimprägniert sind, und wobei das Backenpaar ( ) aus gelenkig gelagerten Backen (912, 932), die über ein Schwenkgelenk mit einer zur Längsrichtung der Förderschienen parallelen Schwenkachse (918, 938) an den Förderschienen befestigt sind, wobei ein Schwenkwinkel (920, 940) der gelenkgeführten Schwenkbacken durch einen Drehmechanismus gesteuert wird und die gelenkgeführten Schwenkbacken mehrere Klemmschlitze (922, 924, 926, 946, 948, 950), die in unterschiedlichen Höhen relativ zur Schwenkachse (918, 938) verteilt sind und dazu ausgelegt sind, die Enden der tragenden unidirektionalen Fasern (906, 914, 934) entsprechend ihrer Höhe im Laminat zu klemmen.

10. Verfahren zum Stanzen eines thermoplastischen Verbundwerkstoff-Rohlings, der Faserschichten umfasst, die Endlosfasern in einer thermoplastischen Polymermatrix enthalten, unter Verwendung einer Transfervorrichtung zum Transportieren des thermoplastischen Verbundwerkstoff-Rohlings von einer Montagestation (402) zu einer Heizstation (404) und einer Tiefziehenstation (406), wobei der thermoplastische Verbundwerkstoff-Rohling einen Formungsbereich umfasst, der aus einem Laminat aus Faserschichten besteht, die Endlosfasern in einer thermoplastischen Polymermatrix und mit dem thermoplastischen Polymer vorimprägnierte unidirektionale Stützfasern enthalten, mit den folgenden Schritten:
das Befestigen (1004) des thermoplastischen Verbundwerkstoff-Rohlings an der Befestigungsstation an einer Vorrichtung, die ein Paar an den Förderschienen der Transfervorrichtung befestigte Backen umfasst, durch Einklemmen der Enden der unidirektionalen Stützfasern in Klemmschlitze des Backenpaares;
Spannen (1006) der unidirektionalen Stützfasern, um den thermoplastischen Verbundwerkstoff-Rohling zwischen den Förderschienen aufzuhängen;
das an der Vorrichtung befestigte laminierte Verbundwerkstoff-Rohteil zur Heizstation (404) zu bewegen (1008) und das thermoplastische Verbundwerkstoff-Rohteil auf eine für das Stanzen geeignete Temperatur nahe dem Schmelzpunkt der thermoplastischen Polymermatrix zu erwärmen (1010);
Bewegen (1010) des an der Vorrichtung befestigten, erhitzten thermoplastischen Verbundwerkstoff-Rohlings zur Tiefziehenstation (406) zwischen einem Stempel und einer Unterstempel, die einen Matriz aufweist;
Lösen der Spannung in den unidirektionalen Stützfasern und Tiefziehen (1014) des Formungsbereichs durch einen Hub des Stempels in Richtung des Matriz, wobei die unidirektionalen Stützfasern in den Klemmschlitzen der Backen festgeklemmt sind;
Halten des Formungsbereichs in einem kalibrierten Luftspalt zwischen dem Stempel und dem Matriz zur Verfestigung; und
Entformen (1018) eines fertigen Teils (702, 704, 802).

11. Verfahren nach Anspruch 10, umfassend nach dem Entformen (1018) das Abschneiden (1018) überschüssiger Längen der unidirektionalen Stützfasern, die nicht mit dem fertigen Teil mitverfestigt wurden.

12. Verfahren nach Anspruch 10, wobei der thermoplastische Verbundwerkstoff-Rohling ein Laminat aus Faserschichten umfasst, die Endlosfasern enthalten, und wobei unidirektionale Fasern mehrerer Faserschichten, die entlang der Höhe des Laminats verteilt sind, als stützende unidirektionale Fasern über die Ränder des Formbereichs hinausragen, wobei die stützenden unidirektionalen Fasern mit einem thermoplastischen Polymer vorimprägniert sind und wobei das Backenpaar geführte Schwenkbacken (912, 932), die über ein Schwenkgelenk mit einer zur Längsrichtung der Förderschienen parallelen Schwenkachse (918, 938) an den Förderschienen (306, 308) befestigt sind, wobei ein Schwenkwinkel (920, 940) der geführten Schwenkbacken durch einen Drehmechanismus gesteuert wird und die geführten Schwenkbacken mehrere Klemmschlitze (922, 924, 926, 946, 948, 950), die in unterschiedlichen Höhen relativ zur Schwenkachse verteilt und so ausgelegt sind, dass sie die Enden der tragenden unidirektionalen Fasern entsprechend ihrer Höhe im Laminat festklemmen, umfassend:
während der Montage (1004) des thermoplastischen Verbundwerkstoff-Rohlings auf der Vorrichtung das Festklemmen der Enden der tragenden unidirektionalen Fasern in den mehreren Klemmschlitzen (922, 924, 926, 946, 948, 950) der gesteuerten Schwenkbacken entsprechend ihrer Höhe im Laminat; und während des Tiefziehen (1014), nach dem Lösen der Spannung, das Aufbringen einer differentiellen Spannung auf die Lagen durch Schwenken der gesteuerten Schwenkbacken (912, 932).

## Revendications

1. Dispositif (300) adapté à un appareil de transfert pour le transport d'un flan composite thermoplastique (100, 200, 804) vers un poste de chauffage (404) et un poste d'estampage (406), le flan composite thermoplastique comprenant des fibres de renfort dans une matrice de polymère thermoplastique, comprenant :
une paire de mâchoires (314, 316, 904, 912, 932) et un mécanisme de tension configuré pour maintenir les mâchoires espacées les unes des autres par une largeur de transport (326) ; et
l'ébauche composite thermoplastique comprenant une zone de mise en forme (102, 202, 302, 702, 704, 810) configurée pour être mise en forme par estampage et des fibres unidirectionnelles de support (104, 114, 204, 304, 812, 814, 906, 914, 934) s'étendant au-delà des bords de la zone de mise en forme et attachées à la zone de mise en forme, les fibres unidirectionnelles étant pré-imprégnées d'un polymère thermoplastique ;
dans lequel les extrémités des fibres unidirectionnelles sont serrées dans la paire de mâchoires et tendues à la largeur de transport (326), la zone de mise en forme étant suspendue entre les mâchoires par les fibres unidirectionnelles de support.

2. Dispositif selon la revendication 1, dans lequel les fibres unidirectionnelles de support comprennent des bandes de maintien (204) agencés selon une grille de support et dans lequel la zone de mise en forme (202) repose sur la grille de support, fixée à la grille de support par des tronçons d'un adhésif résistant aux températures élevées.

3. Dispositif selon la revendication 1, dans lequel la zone de mise en forme comprend une stratification de plis fibreux, au moins un pli de la stratification comprenant des fibres continues, les fibres continues, pré-imprégnées du polymère thermoplastique de la matrice, s'étendant au-delà des bords de la zone de mise en forme comme fibres unidirectionnelles de support.

4. Dispositif selon la revendication 1, dans lequel la zone de mise en forme comprend une stratification de plis fibreux, au moins un pli de la stratification comprenant des fibres continues, des parties des fibres continues, pré-imprégnées du polymère thermoplastique de la matrice, s'étendant au-delà des bords de la zone de mise en forme pour former des bandes de maintien (114, 304, 812, 814) comme fibres unidirectionnelles de support.

5. Dispositif selon la revendication 1, dans lequel la zone de mise en forme comprend une stratification de plis fibreux comprenant des fibres continues, les fibres continues, et dans lequel des fibres unidirectionnelles (104, 114, 812, 814, 906, 914, 934) de plusieurs plis fibreux répartis sur une hauteur de stratification, pré-imprégnées du polymère thermoplastique de la matrice, s'étendent au-delà des bords de la zone de mise en forme comme fibres unidirectionnelles de support.

6. Dispositif selon la revendication 5, dans lequel une longueur d'une fibre unidirectionnelle de support à partir d'un bord de la zone de mise en forme vers une fente de serrage (922, 924, 926, 946, 948, 950) de la mâchoire est différente selon la hauteur du pli fibreux dans la stratification.

7. Appareil de transfert pour déplacer un flan composite (100, 200, 804) vers un poste de chauffage (404) et un poste d'estampage (406), comprenant une paire de rails de convoyage (306, 308) et un dispositif selon la revendication 1, dans lequel la paire de mâchoires (314, 316, 904, 912, 932) est connectée à la paire de rails de convoyage and dans lequel le poste d'estampage comprend une matrice d'estampage (504) avec une empreinte (506) et un poinçon (502) configuré pour se déplacer selon une course )510) relativement à la matrice d'estampage depuis une position ouverte, permettant au dispositif maintenant le flan composite thermoplastique d'être déplacé par l'appareil de transfert entre la matrice d'estampage et le poinçon et une position fermée dans laquelle le poinçon pénètre dans l'empreinte, une surface du poinçon étant distante d'une surface de l'empreinte par un entrefer calibré.

8. Appareil de transfert selon la revendication 7, dans lequel le dispositif comprend un câble (318) fixé aux rails de convoyage (306, 308) et s'étendant entre la paire de rails de convoyage, le poinçon comprenant un butoir (602) fixé à un côté du poinçon et configuré pour interagir avec le câble pendant la course (510) du poinçon, une extrémité du butoir poussant sur le câble pour amener les mâchoires à se rapprocher les unes des autres.

9. Appareil de transfert selon la revendication 7, dans lequel la zone de mise en forme comprend une stratification de plis fibreux comprenant des fibres continues et dans lequel les fibres unidirectionnelles (104, 114, 812, 814, 906, 914, 934) de multiples plis fibreux répartis le long d'une hauteur de la stratification s'étendent au-delà des bords de la zone de mise en forme en tant que fibres unidirectionnelles de support, les fibres unidirectionnelles de support étant pré-imprégnées d'un polymère thermoplastique et dans lequel la paire de mâchoires comprend des mâchoires pivotantes pilotées (912, 932) fixées aux rails de convoyage par une liaison pivot avec un axe de pivotement (918, 938) parallèle à une longueur des rails de convoyage, un angle de pivotement (920, 940) des mâchoires pivotantes pilotées étant contrôlé par un mécanisme de rotation, les mâchoires pivotantes pilotées comprenant de multiples fentes de serrage (922, 924, 926, 946, 948, 950) réparties à différentes hauteurs par rapport à l'axe de pivotement (918, 938), et configurées pour serrer des extrémités des fibres unidirectionnelles de support (906, 914, 934) en fonction de leur hauteur dans la stratification.

10. Procédé pour l'estampage d'un flan composite thermoplastique comprenant des plis fibreux comprenant des fibres continues dans une matrice en polymère thermoplastique, mettant en oeuvre un appareil de transfert pour le transport du flan composite thermoplastique d'un poste de montage (402) à un poste de chauffage (404) et un poste d'estampage (406), le flan composite thermoplastique comprenant une zone mise en forme comprenant une stratification de plis fibreux, comprenant des fibres continues dans une matrice de polymère thermoplastique et des fibres de support unidirectionnelles pré-imprégnées du polymère thermoplastique, comprenant :
installer (1004) l'ébauche composite thermoplastique au niveau de la station de montage sur un dispositif comprenant une paire de mâchoires connectées à des rails de convoyage de l'appareil de transfert, par le serrage d'extrémités des fibres unidirectionnelles de support dans des fentes de serrage de la paire de mâchoires ;
tendre (1006) des fibres de support unidirectionnelles pour la suspension de l'ébauche composite thermoplastique entre les rails de convoyage ;
déplacer (1008) ébauche composite stratifiée installée dans le dispositif vers le poste de chauffage (404) et chauffer(1010) de l'ébauche composite thermoplastique à une température adaptée pour l'estampage proche d'un point de fusion de la matrice polymère thermoplastique ;
déplacer (1010) l'ébauche composite thermoplastique chauffée installée dans le dispositif au poste d'estampage (406) entre un poinçon et une matrice d'estampage comprenant une empreinte ;
relâcher une tension dans les fibres de support unidirectionnelles et estamper (1014) la zone de mise en forme par une course du poinçon vers l'empreinte, les fibres de support unidirectionnelles étant serrées dans les fentes de serrage des mâchoires ;
maintenir de la zone mise en forme dans un entrefer calibré entre le poinçon et l'empreinte pour consolidation ; et
démouler (1018) une pièce finie (702, 704, 802).

11. Procédé selon la revendication 10, comprenant, après le démoulage (1018), le détourage (1018) de longueurs excédentaires des fibres unidirectionnelles de support non co-consolidées avec la pièce finie.

12. Procédé selon la revendication 10, dans lequel la zone mise en forme du flan composite thermoplastique comprend une stratification de plis fibreux comprenant des fibres continues et dans lequel les fibres unidirectionnelles de multiples plis fibreux répartis le long d'une hauteur de la stratification s'étendent au-delà des bords de la zone de mise forme en tant que fibres unidirectionnelles de support, les fibres unidirectionnelles de support étant pré-imprégnées d'un polymère thermoplastique et dans lequel la paire de mâchoires comprend des mâchoires pivotantes pilotées (912, 932) connectées aux rails de convoyage (306, 308) par une liaison pivot d'axe de pivotement (918, 938) parallèle à une longueur des rails de convoyage, un angle de pivotement (920, 940) des mâchoires pivotantes pilotées étant contrôlé par un mécanisme de rotation, les mâchoires pivotantes pilotées comprenant de multiples fentes de serrage (922, 924, 926, 946, 948, 950) réparties à différentes hauteurs par rapport à l'axe de pivotement et configurées pour serrer des extrémités des fibres unidirectionnelles de support (906, 914, 934) en fonction de leur hauteur dans la stratification, comprenant:
pendant l'installation (1004) de l'ébauche composite thermoplastique sur le dispositif, serrere les extrémités des fibres unidirectionnelles de support dans les multiples fentes de serrage (922, 924, 926, 946, 948, 950) des mâchoires pivotantes pilotées selon leur hauteur dans la stratification ; et pendant l'estampage (1014), après relâchement de la tension, appliquer une tension différentielle aux plis en faisant pivoter les mâchoires pivotantes pilotées (912, 932).
